# EUROPÄISCHE PATENTSCHRIFT

(11) **EP 0 794 162 B1**
(45) Veröffentlichungstag und Bekanntmachung des Hinweises auf die Patenterteilung: **04.08.1999**
(21) Anmeldenummer: 96119585.6
(22) Anmeldetag: 06.12.1996
(51) Int. Cl.: C04B 40/06, F16B 13/14

(54) **Aushärtbare Mörtelmasse**
Hardenable mortar composition
Composition de mortier durcissable

(30) Priorität: 07.03.1996 DE 19608807
(43) Veröffentlichungstag der Anmeldung: 10.09.1997
(73) Patentinhaber: fischerwerke Artur Fischer GmbH & Co. KG, 72178 Waldachtal (DE)
(72) Erfinder: Arnold, Norbert, Dr., 72178 Waldachtal (DE); Haug, Willi, 72250 Freudenstadt-Musbach (DE); Lind, Stefan, 72178 Waldachtal (DE)

(56) Entgegenhaltungen:
- EP-A- 0 005 987
- EP-A- 0 597 217
- DE-A- 4 432 879
- US-A- 4 018 679
- US-A- 4 127 001

## Beschreibung

Die Erfindung betrifft eine aushärtbare Mörtelmasse aus einer Bindemittel-Komponente und einer wässrigen Komponente, die getrennt voneinander beispielsweise in einer Patrone oder einer Kartusche aufbewahrt werden.

Unter Patrone soll ein zerstörbares Behältnis verstanden werden, das eine der beiden Komponenten der Mörtelmasse und ein oder mehrere Innenbehälter enthält, in denen sich die andere Komponente der Mörtelmasse befindet. Die Patrone wird beispielsweise in ein Bohrloch eingeführt, mittels eines in dem Bohrloch zu verankernden Ankers zerstört und die beiden Komponenten durch Drehen des Ankers miteinander vermischt. Unter Kartusche soll ein Zwei- oder Mehrkammerbehälter verstanden werden, in dessen Kammern die beiden Komponenten der Mörtelmasse voneinander getrennt enthalten und die in einem vorgegebenen Mischungsverhältnis durch eine Mischdüse hindurch auspreßbar sind und beim Auspressen in der Mischdüse miteinander vermischt werden.

Eine Mörtelmasse der eingangs genannten Art ist bekannt aus der P 44 32 879. Als Bindemittel-Komponente weist die bekannte Mörtelmasse mineralischen Mörtel, der mit Wasser aushärtet, und ein gegenüber dem mineralischen Mörtel inertes, unpolares Lösungsmittel als Anteigmittel auf. Durch das Vermischen des Mörtels mit dem Lösungsmittel zu einer Mörtel-Komponente wird der Mörtel angeteigt, d. h. seine Schüttdichte wird auf das drei- bis vierfache erhöht. Dadurch kann eine wesentlich größere Menge Mörtel in einem vorgegebenen Volumen untergebracht werden. Ferner werden die Dichten der beiden Komponenten der Mörtelmasse einander angeglichen und das Fließverhalten des Mörtels verbessert. Eine Pfropfenbildung beim Mischen der Mörtelmasse in der Mischdüse einer Zweikammer-Kartusche wird vermieden. Die zweite Komponente der bekannten Mörtelmasse ist Wasser oder eine überwiegend Wasser enthaltende Zubereitung.

Zum Verarbeiten der Mörtelmasse werden deren Komponenten miteinander gemischt, wobei das Wasser aufgrund der stark unterschiedlichen Polaritäten des polaren Mörtels und des unpolaren Anteigmittels das Anteigmittel aus dem Mörtel verdrängt. Der Mörtel bindet hydraulisch ab und das Anteigmittel tritt aus der angemischten Mörtelmasse aus. Dies hat zur Folge, daß das Anteigmittel aus einem Bohrloch oder dgl.in das die angemischte Mörtelmasse eingebracht ist, austritt und beispielsweise an einer Wand herabläuft oder von einer Decke heruntertropft. Das bringt zumindest den Nachteil eines optisch negativen Eindrucks mit sich. Darüberhinaus kann das austretende Anteigmittel bei einem Verwender den Eindruck erwecken, die Mörtelmasse sei nicht richtig angemischt und binde nicht richtig ab. Beispielsweise an einer Wand herablaufendes Anteigmittel ist nicht akzeptabel, wenn deren Oberfläche bereits ihren Endzustand erhalten hat. Des weiteren kann das Anteigmittel die Oberfläche, mit der es in Berührung kommt, chemisch verändern, insbesondere unerwünscht verfärben.

Der Erfindung liegt daher die Aufgabe zugrunde, eine Mörtelmasse der eingangs genannten Art so zu verbessern, daß das Anteigmittel nicht aus der angemischten Mörtelmasse austritt.

Diese Aufgabe wird erfindungsgemäß mit den Merkmalen des Anspruchs 1 gelöst. Im Wasser der erfindungsgemäßen Mörtelmasse ist ein hydrophobes Ad- oder Absorptionsmittel aufgeschlemmt. Wasser und hydrophobes Ad- oder Absorptionsmittel stellen die wässrige Komponente der Mörtelmasse dar, die von der Bindemittel-Komponente getrennt aufbewahrt wird. Das hydrophobe Ad- oder Absorptionsmittel ist gegenüber Wasser und auch gegenüber der angemischten Mörtelmasse inert. Beim Mischen bindet das hydrophobe Ad- oder Absorptionsmittel das aus der Bindemittel-Komponente verdrängte unpolare Anteigmittel. Das hydrophobe Ad- oder Absorptionsmittel mit dem gebundenen Anteigmittel verbleibt fein verteilt als inerter Zuschlagstoff in der hydraulisch abbindenden Mörtelmasse, ohne die Festigkeit der ausgehärteten Mörtelmasse zu beeinflussen. Die Erfindung hat den Vorteil, daß das Anteigmittel in der angemischten Mörtelmasse verbleibt ohne deren Eigenschaffen zu verschlechtern.

Hydrophobe Ad- oder Absorptionsmittel der wässrigen Komponente der erfindungsgemäßen Mörtelmasse können hydrophobierte Stoffe auf silikatischer Basis, beispielsweise Kieselgele, Zeolithe oder Kieselgur, jeweils in hydrophober Modifizierung sein. Die Hydrophobierung kann über chemische Hilfsmittel wie z.B. funktionalisierte Silane oder durch gezielte Strukturänderung, z.B. Austausch von Aluminium- gegen Silicium-Atome erfolgen. Des weiteren kommt Aktivkohle als hydrophobes Ad- oder Absorptionsmittel in Betracht.

Der wässrigen Komponente kann ein Verdickungsmittel (z. B. modifizierte Cellulose, (Meth)Acrylsäurepolymere, Polyvinylalkohol oder ähnliche wasserlösliche Polymere) zugesetzt sein. Bei einer Weiterbildung der Erfindung ist die wässrige Komponente mit einem Thixotropiermittel derart eingestellt, daß sie sich ohne Einwirkung von Scherkräften pastös verhält. Dadurch wird, insbesondere wenn die Mörtelmasse in einer Patrone enthalten ist, vermieden, daß die wässrige Komponente nach dem Zerstören der Patrone abfließt. Beim Mischen der beiden Komponenten der Mörtelmasse auftretende Scherkräfte verringern die Viskosität der wässrigen Komponente, so daß sich die beiden Komponenten gut vermischen lassen, um ein vollständiges Abbinden der Mörtelmasse und damit eine hohe Festigkeit der ausgehärteten Mörtelmasse sicherzustellen.

Ein geeignetes Thixotropiermittel ist beispielsweise amorphe, pyrogene Kieselsäure, die der wässrigen Komponente mit 0,5 Gew.-% bis 10 Gew.-% zugemischt ist.

Als hydraulisches Bindemittel können Zement, Gips oder gebrannter Kalk in der Bindemittel-Komponente enthalten sein.

Als besonders vorteilhaft zum Anteigen des hydraulischen Bindemittels der Bindemittel-Komponente haben sich wasserunlösliche, unpolare Lösungsmittel erwiesen. Durch den Gegensatz zwischen polarem Bindemittel und unpolarem Lösungsmittel wird beim Vermischen der beiden Komponenten das das Anteigmittel bildende Lösungsmittel spontan aus der Bindemittel-Komponente verdrängt. Damit läuft der Aushärtevorgang der Mörtelmasse unbeeinflußt von dem Anteigmittel ab, so daß kein Festigkeitsverlust nach Abschluß des Aushärtevorganges auftritt. Als Anteigmittel geeignete, wasserunlösliche unpolare Lösungsmittel sind gesättigte Kohlenwasserstoffe, beispielsweise Alkane wie Hexan oder Heptan, Ether, Chlorkohlenwasserstoffe wie Dichlormethan, Fluorkohlenwasserstoffe, Fluorchlorkohlenwasserstoffe, Silikonöle, Paraffinöle und andere alkalibeständige Öle.

Der Anteil des Lösungsmittels an der Bindemittel-Komponente kann 5 bis 50 Gewichtsprozent, vorzugweise 15 bis 30 Gewichtsprozent betragen.

Die erfindungsgemäße Mörtelmasse kann weitere Komponenten zusätzlich zur Bindemittel-Komponente und zur wässrigen Komponente und/oder Zuschlagstoffe in ihren Komponenten aufweisen. Durch Zusatz von amphoteren Substanzen wie Seifen oder Tensiden läßt sich der notwendige Lösungsmittelanteil in der Bindemittel-Komponente reduzieren. Vorteilhaft ist es, wenn die Substanz selbst flüssig vorliegt und dadurch bereits anteigend wirkt. Solche Substanzen können niedermolekulare Polymere auf Acrylat- oder Siloxanbasis mit polaren Seitenketten wie Alkoxylgruppen oder Oligoethylenoxidketten sein. Der Anteil der Substanzen ist etwa 0,005 - 10 %, insbesondere 0,01 - 5 % des Anteigmittels.

Der Zusatz niedermolekularer, hochviskoser Polymere mit einem Molekulargewicht von etwa 400 - 2500 g/mol zur Bindemittel-Komponente hat den Vorteil, daß die Polymere die angeteigte Bindemittel-Komponente stabilisieren, d. h. sie verhindern ein Entmischen beim Lagern oder Auspressen aus einer Kartusche. Solche Polymere sind beispielsweise Siloxane, Acrylate, Vinylester, vorzugsweise in einem Verhältnis von 1-30 %, insbesondere 3 - 20 % zum Anteigmittel.

Rezepturbeispiele erfindungsgemäßer Mörtelmassen:
1. Bindemittel-Komponente:
   - 50 T: Mörtel, mineralisch
   - 8 T: Paraffinöl
   - 5 T: niedermolekulares Silikonharz
   Wässrige Komponente:
   - 15 T: Wasser
   - 1 T: pyrogene Kieselsäure
   - 6 T: hydrophober Zeolith
2. Bindemittel-Komponente:
   wie 1.
   Wässrige Komponente:
   - 18 T: Wasser
   - 1,5 T: Aktivkohle
   - 1,5 T: pyrogene Kieselsäure
   - 3 T: hydrophober Zeolith
3. Bindemittel-Komponente:
   - 17 T: Alkanmischung, Siedepunkt 180 - 260°C
   - 0,4 T: hydrophobierte, pyrogene Kieselsäure
   - 2 T: oligomeres Tensid auf Acrylbasis
   - 160 T: Mörtel, mineralisch
   Wässrige Komponente:
   - 40 T: Wasser
   - 3 T: pyrogene Kieselsäure

## Patentansprüche

1. Aushärtbare Mörtelmasse, enthaltend
- eine Bindemittel-Komponente, die
- ein hydraulisches Bindemittel und
- ein gegenüber dem hydraulischen Bindemittel inertes, flüssiges Lösungsmittel als Anteigmittel aufweist und
- eine davon getrennt aufbewahrte wässrige Komponente, die
- Wasser und
- ein hydrophobes Ad- oder Absorptionsmittel aufweist.

2. Mörtelmasse nach Anspruch 1, **dadurch gekennzeichnet**, daß das hydrophobe Ad- oder Absorptionsmittel ein hydrophobierter Stoff auf silikatischer Basis ist.

3. Mörtelmasse nach Anspruch 1 oder 2, **dadurch gekennzeichnet**, daß das hydrophobe Ad- oder Absorptionsmittel hydrophobiertes Kieselgel, ein hydrophober Zeolith oder hydrophobe Kieselgur ist.

4. Mörtelmasse nach Anspruch 1, **dadurch gekennzeichnet**, daß das hydrophobe Ad- oder Absorptionsmittel Aktivkohle ist.

5. Mörtelmasse nach Anspruch 1, **dadurch gekennzeichnet**, daß die wässrige Komponente mit einem Thixotropiermittel derart eingestellt ist, daß sie sich ohne Einwirkung von Scherkräften pastös verhält.

6. Mörtelmasse nach Anspruch 1, **dadurch gekennzeichnet**, daß das hydraulische Bindemittel Zement, Gips oder gebrannter Kalk ist.

7. Mörtelmasse nach Anspruch 1, **dadurch gekennzeichnet**, daß das Anteigmittel ein wasserunlösliches, unpolares Lösungsmittel ist.

8. Mörtelmasse nach Anspruch 1, **dadurch gekennzeichnet**, daß der Anteil des Anteigmittels in der Bindemittel-Komponente 5 bis 50 Gewichtsprozent, vorzugsweise 15 bis 30 Gewichtsprozent beträgt.

9. Mörtelmasse nach Anspruch 1, **dadurch gekennzeichnet**, daß die Bindemittel-Komponente eine amphotere Substanz aufweist.

10. Mörtelmasse nach Anspruch 9, **dadurch gekennzeichnet**, daß die amphotere Substanz flüssig ist.

11. Mörtelmasse nach Anspruch 9, **dadurch gekennzeichnet**, daß der Anteil der amphoteren Substanz zwischen 0,005 - 10 %, vorzugsweise 0,01 - 5 % bezogen auf das Anteigmittel ist.

12. Mörtelmasse nach Anspruch 1, **dadurch gekennzeichnet**, daß die Bindemittel-Komponente ein niedermolekulares, hochviskoses Polymer aufweist.

13. Mörtelmasse nach Anspruch 12, **dadurch gekennzeichnet**, daß der Anteil des niedermolekularen, hochviskosen Polymers 1 - 30 %, vorzugsweise 3 - 20 % bezogen auf das Anteigmittel ist.

## Claims

1. Hardenable mortar composition, containing
- a bonding agent component which comprises
- a hydraulic bonding agent and
- as paste-forming agent a liquid solvent that is inert with respect to the hydraulic bonding agent and
- an aqueous component kept separate therefrom which comprises
- water and
- a hydrophobic adsorbent or absorbent.

2. Mortar composition according to claim 1, characterized in that the hydrophobic adsorbent or absorbent is a silicate-based substance that has been rendered hydrophobic.

3. Mortar composition according to claim 1 or 2, characterized in that the hydrophobic adsorbent or absorbent is silica gel that has been rendered hydrophobic, a hydrophobic zeolite or hydrophobic diatomite.

4. Mortar composition according to claim 1, characterized in that the hydrophobic adsorbent or absorbent is activated carbon.

5. Mortar composition according to claim 1, characterized in that the aqueous component is adjusted with a thixotropic agent so that it behaves as a paste without the action of shear forces.

6. Mortar composition according to claim 1, characterized in that the hydraulic bonding agent is cement, gypsum or quicklime.

7. Mortar composition according to claim 1, characterized in that the paste-forming agent is a water-insoluble non-polar solvent.

8. Mortar composition according to claim 1, characterized in that the proportion of paste-forming agent in the bonding agent component totals from 5 to 50 percent by weight, preferably from 15 to 30 percent by weight.

9. Mortar composition according to claim 1, characterized in that the bonding agent component comprises an amphoteric substance.

10. Mortar composition according to claim 9, characterized in that the amphoteric substance is liquid.

11. Mortar composition according to claim 9, characterized in that the proportion of amphoteric substance is between 0.005 - 10%, preferably 0.01 - 5%, calculated on the basis of the paste-forming agent.

12. Mortar composition according to claim 1, characterized in that the bonding agent component comprises a low-molecular weight, very viscous polymer.

13. Mortar composition according to claim 12, characterized in that the proportion of low-molecular weight, very viscous polymer is from 1 - 30%, preferably from 3 - 20 %, calculated on the basis of paste-forming agent.

## Revendications

1. Composition de mortier durcissable, contenant :
- un composant liant, qui présente
- un liant hydraulique et
- comme agent de mise en pâte, un solvant liquide inerte vis-à-vis du liant hydraulique et
- un composant aqueux qui en est conservé séparément et qui présente
- de l'eau et
- un agent adsorbant ou absorbant hydrophobe.

2. Composition de mortier suivant la revendication 1, caractérisée en ce que l'agent adsorbant ou absorbant hydrophobe est une substance rendue hydrophobe à base de silicate.

3. Composition de mortier suivant la revendication 1 ou 2, caractérisée en ce que l'agent adsorbant ou absorbant hydrophobe est un gel de silice rendu hydrophobe, une zéolite hydrophobe ou du kieselguhr hydrophobe.

4. Composition de mortier suivant la revendication 1, caractérisée en ce que l'agent adsorbant ou absorbant hydrophobe est du charbon actif.

5. Composition de mortier suivant la revendication 1, caractérisée en ce que un thixotrope est incorporé au composant aqueux de telle manière qu'il ait un comportement pâteux sans l'intervention de forces de cisaillement.

6. Composition de mortier suivant la revendication 1, caractérisée en ce que le liant hydraulique est du ciment, du plâtre ou de la chaux vive.

7. Composition de mortier suivant la revendication 1, caractérisée en ce que l'agent de mise en pâte est un solvant non polaire insoluble dans l'eau.

8. Composition de mortier suivant la revendication 1, caractérisée en ce que la proportion d'agent de mise en pâte dans le composant liant est de 5 à 50 % en poids, de préférence de 15 à 30 % en poids.

9. Composition de mortier suivant la revendication 1, caractérisée en ce que le composant liant présente une substance amphotère.

10. Composition de mortier suivant la revendication 9, caractérisée en ce que la substance amphotère est liquide.

11. Composition de mortier suivant la revendication 9, caractérisée en ce que la proportion de substance amphotère se situe entre 0,005 et 10 %, de préférence entre 0,01 et 5 % par rapport à l'agent de mise en pâte.

12. Composition de mortier suivant la revendication 1, caractérisée en ce que le composant liant présente un polymère très visqueux de bas poids moléculaire.

13. Composition de mortier suivant la revendication 12, caractérisée en ce que la proportion de polymère très visqueux de bas poids moléculaire est de 1 à 30 %, de préférence de 3 à 20 % par rapport à l'agent de mise en pâte.
